# EUROPÄISCHE PATENTANMELDUNG

(11) **EP 2 676 583 A1**
(43) Veröffentlichungstag der Anmeldung: **25.12.2013**
(21) Anmeldenummer: 13171577.3
(22) Anmeldetag: 12.06.2013
(51) Int. Cl.: A47J 31/44, F16J 15/06, F16J 15/10

(54) **Kompressionsring für Padmaschine**

(30) Priorität: 19.06.2012 DE 102012210266
(71) Anmelder: BSH Bosch und Siemens Hausgeräte GmbH, 81739 München (DE)
(72) Erfinder: Höglauer, Michael, 83246 Unterwössen (DE); Seler, Ismar, 83278 Traunstein (DE); Steffl, Michael, 83250 Marquartstein (DE)

(57) **Zusammenfassung**

Ein Kompressionsring aus einem elastischen Material mit einem Schnurquerschnitt und mit einer definierten Steifigkeit zur Abdichtung des Brühkopfs einer Heißgetränkepadmaschine, wird dadurch weitergebildet, dass der Schnurquerschnitt variiert. Die Erfindung betrifft außerdem eine Heißgetränkepadmaschine mit einem derartigen Kompressionsring zur Abdichtung einer Brühkammer.

## Beschreibung

Die Erfindung betrifft einen Kompressionsring aus einem elastischen Material mit einem Schnurquerschnitt und mit einer definierten Steifigkeit zur Abdichtung des Brühkopfs bzw. der Brühkammer einer Heißgetränke-Padmaschine. Der Kompressionsring stellt folglich einen Dichtring dar, der für eine Abdichtung zwischen einem im Allgemeinen schwenkbaren Brühkammeroberteil und einem feststehenden Brühkammerunterteil des Brühkopfs der Padmaschine sorgt. Er ist regelmäßig als O-Ring ausgebildet, weist nämlich einen O-förmigen so genannten Schnurquerschnitt in einer Richtung senkrecht auf seine Erstreckungsebene auf, der ihm den Namen gibt. Als Material für den Kompressionsring kommen verschiedene Kautschuk-Silikon-Arten oder TPE (thermoplastische Elastomere) in Betracht, beispielsweise Perfluorkautschuk (FFKM oder FFPM), EPDM, NBR, Silikon (VMQ, LSR) oder Polytetrafluorethylen (PTFE).

Der Kompressionsring hat die Aufgabe, den Brühkopf aus dem Brühkammerunterteil, dem Oberteil, einem Verhakungssystem und einem elastisch gelagerten Druckdeckel, in dem eine Getränkekapsel bzw. ein Pad positioniert ist, abzustützen und zu dichten. Der Druckdeckel sorgt für eine definierte Kraft auf das Pad, was für eine gute Getränkequalität hinsichtlich Schaum bzw. Crema von Bedeutung ist. Der elastische Kompressionsring bzw. O-Ring ist zwischen dem Druckdeckel und dem Oberteil positioniert, um das Pad sowie das komplette Wasserführungssystem für die Zubereitung von Heißgetränken im Druckbereich möglichst wenig zu belasten, die hochfesten Bauteile des Oberteils und des Unterteils hinsichtlich Abrieb zu schonen sowie die Fertigungs- und Materialtoleranzen auszugleichen. Mit der Zunahme der Steifigkeit des Brühkopfs bzw. des Brühkammerober- bzw. -unterteils lassen sich jedoch Toleranzen in diesen Bauteilen immer weniger kompensieren. Diese Aufgabe kommt zunehmend dem Kompressionsring zu. Andererseits soll die Federkennlinie des Kompressionsrings in seinem Arbeitsbereich möglichst flach ausgelegt werden. Bekannte O-Ringe bilden deswegen einen Kompromiss zwischen den unterschiedlichen Druck- bzw. Kompressionszuständen. Dafür zwei übereinander liegende O-Ringe unterschiedlicher Härte bzw. Steifigkeit einzubauen, erhöht sowohl den Herstellungsaufwand wie auch die Fehleranfälligkeit der Konstruktion.

Es ist daher Aufgabe der Erfindung, einen Kompressionsring anzugeben, der sowohl einen Toleranzausgleich ermöglicht als auch in seinem Arbeitsbereich eine möglichst flache Federkennlinie aufweist.

Diese Aufgabe wird bei dem eingangs genannten Kompressionsring erfindungsgemäß dadurch gelöst, dass er einen Schnurquerschnitt aufweist, der variiert. Er besitzt folglich entlang seines Umfangs keinen konstanten Schnurquerschnitt. Die Erfindung wendet sich also davon ab, einen regelmäßigen, nämlich mit nur einem einzigen Kreisquerschnitt ausgebildeten O-Ring zu verwenden. Sie verfolgt vielmehr das Prinzip, den Querschnitt des Kompressionsrings in dessen Verlauf in Umfangsrichtung unterschiedlich auszugestalten. Damit lässt sich ein Kompressionsring herstellen, der abschnittsweise unterschiedliche Steifigkeiten aufweist, ohne dass sein Material bzw. die Steifigkeit des Materials wechseln müsste. Vielmehr kann durch unterschiedliche Querschnittsformen eine unterschiedliche Steifigkeit erzielt werden, indem abschnittsweise aufgrund unterschiedlicher Querschnittsformen entweder eine unterschiedliche Materialmenge oder eine unterschiedliche Formelastizität vorliegt. So kann ein Steifigkeitsunterschied zweier Abschnitte mit unterschiedlichem Querschnitt allein darauf beruhen, dass in einem ersten Abschnitt ein Querschnitt mit einer geringeren Querschnittsfläche und in einem zweiten Abschnitt ein Querschnitt mit einer größeren Querschnittsfläche angeordnet ist und damit im zweiten Abschnitt mehr Material als im ersten Abschnitt vorliegt. Damit kann der zweite Abschnitt bei gleichem Material eine größere Steifigkeit aufweisen als der erste Abschnitt. Alternativ dazu kann bei einer im Wesentlichen gleichen Querschnittsfläche eine unterschiedliche Querschnittsform zu unterschiedlichen Steifigkeiten des ersten bzw. zweiten Abschnitts führen, wenn nämlich beispielsweise ein Rechteckquerschnitt in dem ersten Abschnitt und ein Trapezquerschnitt in dem zweiten Abschnitt oder ein ovaler Querschnitt in dem ersten Abschnitt mit einer liegenden Orientierung des größeren Durchmessers und in dem zweiten Abschnitt mit einer stehenden Orientierung des größeren Durchmessers gewählt wird. Dann nämlich zeigt der Kompressionsring eine unterschiedliche Steifigkeit der beiden Abschnitte in Abhängigkeit davon, ob er axial oder radial belastet wird.

Nach einer vorteilhaften Ausgestaltung der Erfindung weist der Kompressionsring einen kreisförmigen Schnurquerschnitt auf, bei dem der Schnurdurchmesser variiert. Damit variiert auch die Querschnittsfläche des Kompressionsrings. Er erhält folglich in Bereichen, Abschnitten oder Segmenten mit größerem Schnurdurchmesser eine höhere Steifigkeit als in Bereichen mit einem geringeren Schnurdurchmesser. Ein derart ausgebildeter Kompressionsring zeigt je Bereich sowohl in radialer als auch in axialer Richtung die gleiche Steifigkeit und lässt sich sowohl leichter herstellen als auch ggf. leichter einbauen als ein Kompressionsring mit unterschiedlichen Querschnittsformen.

Nach einer weiteren vorteilhaften Ausgestaltung der Erfindung umfasst der Kompressionsring Abschnitte mit mindestens zwei unterschiedlichen Schnurdurchmessern. Ein Abschnitt des Kompressionsrings ist ein bogenförmiger Teil seines Kreisrings, wobei alle Abschnitte zusammen den vollständigen, geschlossenen Kompressionsring ergeben. Ein Abschnitt ist außerdem derjenige Teil des Kompressionsrings, in dem ein konstanter Schnurdurchmesser vorliegt. Bei zwei unterschiedlichen Schnurdurchmessern weist der Kompressionsring folglich zumindest einen ersten Abschnitt mit einem ersten Schnurdurchmesser und zumindest einen zweiten Abschnitt mit einem zweiten Schnurdurchmesser auf, die sich entlang des Kreisbogens des Kompressionsrings abwechseln. Bei mehreren Schnurdurchmessern kann sich folglich eine Mehrzahl an Kombinationsmöglichkeiten und Abfolgen von Abschnitten mit unterschiedlichen Schnurdurchmessern ergeben. Ein Kompressionsring mit nur zwei unterschiedlichen Schnurdurchmessern und ggf. mehr als zwei Abschnitten ist in der Regel ausreichend, um die erfindungsgemäße Aufgabe zu lösen und ist auch einfach in der Herstellung. Sie stellt eine einfachere, insbesondere leichter zu montierende Alternative zu einer Konstruktion mit zwei herkömmlichen O-Ringen unterschiedlicher Steifigkeit dar.

Umfasst der Kompressionsring Abschnitte mit nur zwei unterschiedlichen Schnurdurchmessern, so ergibt sich geometrisch immer die gleiche Anzahl an ersten und zweiten Abschnitten. Umfasst der Kompressionsring dagegen Abschnitte mit mehr als zwei unterschiedlichen Schnurdurchmessern, so kann sich auch eine unterschiedliche Anzahl an unterschiedlichen Abschnitten ergeben. Nach einer weiteren vorteilhaften Ausgestaltung der Erfindung weist der Kompressionsring eine gleiche Anzahl der Abschnitte mit jeweils unterschiedlichen Schnurdurchmessern auf. Dadurch bietet der Kompressionsring insgesamt entlang seines Verlaufs bzw. seines Kreisrings summarisch betrachtet eine weitgehend gleich verteilte Steifigkeit, so dass ein Verziehen der Brühkammer infolge starker Steifigkeitsunterschiede vermieden werden kann.

Nach einer weiteren vorteilhaften Ausgestaltung der Erfindung kann der Kompressionsring sechs Abschnitte mit einem ersten Schnurdurchmesser und sechs Abschnitte mit einem zweiten Schnurdurchmesser aufweisen. Diese Konstellation hat sich als günstig erwiesen, weil eine größere Anzahl an unterschiedlichen Abschnitten die Herstellung verteuert, eine geringere Anzahl aber zu zu großen ungleichmäßigen Belastungen führt.

Neben der Anzahl der unterschiedlichen Schnurdurchmesser und der Anzahl der zugehörigen Abschnitte bietet die Länge der jeweiligen Abschnitte eine weitere Variationsmöglichkeit des Kompressionsrings. Nach einer weiteren vorteilhaften Ausgestaltung der Erfindung kann der Kompressionsring daher eine unterschiedliche Länge der Abschnitte aufweisen. Dabei können die Abschnitte gleicher Schnurdurchmesser die gleiche Länge aufweisen und sich lediglich gegenüber der Abschnitte mit abweichendem Schnurdurchmesser bezüglich ihrer Länge unterscheiden. Alternativ können auch Abschnitte mit gleichem Schnurdurchmesser eine unterschiedliche Länge aufweisen. Je nach Anforderung und Einsatzfall lässt sich damit die Steifigkeit des Kompressionsrings insgesamt gegenüber Kompressionsringen ähnlicher Bauart variieren. Dadurch kann die Federkennlinie des Kompressionsrings und damit letztlich des Brühkopfs einfach eingestellt bzw. später noch kostengünstig durch Austausch gegen einen anders dimensionierten Kompressionsring angepasst werden.

Nach einer weiteren vorteilhaften Ausgestaltung der Erfindung verfügt der Kompressionsring über mindestens einen weiteren Schnurdurchmesser, der betragsmäßig zwischen dem Schnurdurchmesser eines ersten Abschnitts und dem davon abweichenden Schnurdurchmesser eines zweiten Abschnitts liegt und am Übergang zwischen dem ersten und dem zweiten Abschnitt angeordnet ist. Die Anordnung mindestens eines weiteren Schnurdurchmessers zwischen den beiden Abschnitten mit unterschiedlichem Schnurdurchmesser schafft folglich einen weniger abrupten Übergang zwischen den beiden Abschnitten. Je mehr und je feiner abgestufte weitere derartige Schnurdurchmesser der Kompressionsring zwischen den beiden Abschnitten aufweist, umso sanfter kann der Übergang zwischen den Abschnitten ausgebildet werden. Im Idealfall ergibt sich damit ein weitgehend stetiger Querschnittswechsel zwischen dem ersten und dem zweiten Abschnitt und damit ein ebensolcher Steifigkeitsübergang des Kompressionsrings insgesamt. Je nach Verteilung der abgestuften Schnurdurchmesser kann der Übergang linear bzw. konisch oder z.B. beidseitig ausgerundet ausgebildet sein.

Insbesondere bei Kompressionsringen mit einer Vielzahl an Abschnitten unterschiedlicher Schnurdurchmesser und unterschiedlicher Länge, die nicht punktsymmetrisch oder lediglich einfach achsensymmetrisch angeordnet sind, kommt es auf den korrekten Einbau des Kompressionsrings in der Heißgetränke-Padmaschine an. Nach einer weiteren vorteilhaften Ausgestaltung der Erfindung kann der Kompressionsring daher über eine Positionierhilfe verfügen, die einen fehlerhaften Einbau zumindest deutlich sichtbar macht, oder ggf. den Betrieb der Heißgetränke-Padmaschine blockiert. Die Positionierhilfe ist vorteilhafterweise aus demselben Material ausgebildet, aus dem auch der Kompressionsring an sich besteht. In einer einfachen Ausgestaltungsform kann sie als ein Vorsprung in Form eines Stifts, einer Lasche oder eines Zapfens ausgebildet sein, die beispielsweise parallel oder radial oder in einer Zwischenstellung vom Kompressionsring absteht. Im Übrigen kann ihre Position nahezu beliebig an einem der Abschnitte liegen und ist bestimmt durch das Platzangebot im Brühkopf, dessen Funktion sie nicht stören darf.

Die eingangs genannte Aufgabe wird außerdem durch eine Heißgetränke-Padmaschine mit einem Kompressionsring nach einem der obigen Ansprüche gelöst, der zur Abdichtung des Brühkopfs bzw. der Brühkammer der Heißgetränke-Padmaschine dient.

Das Prinzip der Erfindung wird anhand einer Zeichnung beispielshalber noch näher erläutert. In der Zeichnung zeigen:
- Figur 1:: Einen erfindungsgemäßen Kompressionsring in einer perspektivischen Darstellung,
- Figur 2:: den Kompressionsring in einer Seitenansicht, und
- Figur 3:: den Kompressionsring in einer Draufsicht.

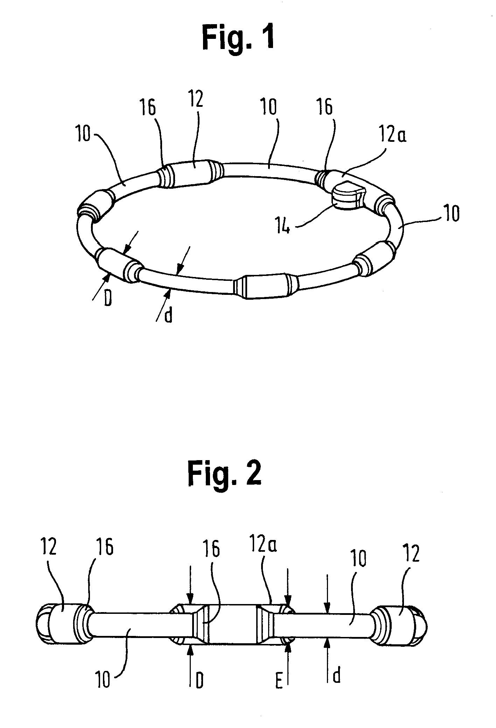

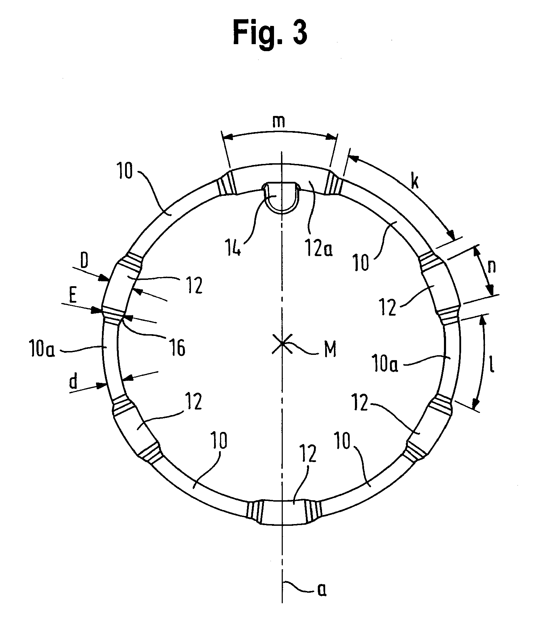

Alle drei Figuren 1 bis 3 zeigen denselben Kompressionsring 1, der aus Silicon (VMQ, LSR) besteht. Er ist regulär kreisförmig ausgebildet und setzt sich aus sechs Abschnitten 10, 10a und ebenso vielen kreisbogenförmigen Abschnitten 12, 12a zusammen. Die Abschnitte 10, 10a und 12, 12a haben einen kreisförmigen bzw. O-förmigen Querschnitt. Sie unterscheiden sich vor allem hinsichtlich ihres Durchmessers, wobei die Abschnitte 10, 10a jeweils einen kleineren Durchmesser d und die Abschnitte 12, 12a jeweils einen größeren Durchmesser D aufweisen. Die Abschnitte 10, 10a haben zwar den übereinstimmenden kleineren Durchmesser d, unterscheiden sich jedoch hinsichtlich ihrer Kreisbogenlänge: die Abschnitte 10 weisen gemäß Figur 3 eine große Kreisbogenlänge k auf, die Abschnitte 10a dagegen eine demgegenüber kleinere Kreisbogenlänge I auf. Die Abschnitte 10, 10a wechseln sich nicht regelmäßig ab und sind damit nicht in gleicher Anzahl vorhanden. Vielmehr folgt auf zwei Abschnitte 10 ein Abschnitt 10a, an den wiederum zwei Abschnitte 10 anschließen, jeweils unter Zwischenschaltung eines Abschnitts 12 oder 12a.

Auch die Abschnitte 12, 12a liegen nicht in derselben Anzahl vor. Es gibt lediglich einen Abschnitt 12a mit einer Kreisbogenlänge m (siehe Figur 3). Die übrigen fünf Abschnitte 12 dagegen weisen die kürzere Kreisbogenlänge n auf.

Die Abschnitte 10, 10a und 12, 12a stoßen nicht unmittelbar aneinander an. Zwischen ihnen ist jeweils ein Übergangsabschnitt 16 angeordnet, der zwischen jedem Abschnitt 10, 10a und 12, 12a weitgehend die gleiche Länge aufweist. Der Übergangsabschnitt 16 zeichnet sich durch eine konische Form aus, die sich von den Durchmessern der kleineren Abschnitte 10, 10a zu den Durchmessern der größeren Abschnitte 12, 12a aufweitet. Der Übergangsabschnitt 16 hat also die Form eines Stumpfes eines Kreiskegels. Sein maximaler Durchmesser entspricht dem Durchmesser D der Abschnitte 12, 12a, sein geringster demjenigen der Abschnitte 10, 10a. Beispielshalber ist lediglich ein Durchmesser E (vgl. Figuren 2 und 3) des Übergangsbereichs 16 angegeben.

Der einzige Abschnitt 12a unterscheidet sich von den übrigen Abschnitten 12 nicht nur hinsichtlich seiner Bogenlänge m, sondern auch bezüglich der Anordnung einer Positionierhilfe 14. Sie ragt als abgerundete Lasche axial zu einem Mittelpunkt des Kompressionsrings hinein und steht damit vom Abschnitt 12a ab. Ihre Dicke in Achsrichtung des Kompressionsrings liegt zwischen dem Betrag des Durchmessers D des Abschnitts 12a und des Durchmessers d der Abschnitte 10.

Die Abschnitte 10, 10a sind punktsymmetrisch bezüglich eines geometrischen Kreismittelpunkts M des Kompressionsrings angeordnet. Die Abschnitte 12, 12a sind weder hinsichtlich ihrer Länge noch hinsichtlich ihrer Anordnung punktsymmetrisch über den Umfang des Kompressionsrings verteilt. Vielmehr zeigen sie eine Achsensymmetrie bezüglich einer Achse a, die durch die Positionierhilfe 14 und durch den Kreismittelpunkt M verläuft. Auf der Achse a liegt der Abschnitt 12a samt Positionierhilfe sowie ihm gegenüber ein weiterer Abschnitt 12. Die verbleibenden vier Abschnitte 12 liegen achsensymmetrisch einander gegenüber. Dementsprechend liegen auch die beiden kürzeren Abschnitte 10a beidseits der Symmetrieachse a. Die verbleibenden längeren Abschnitte 10 schließen unmittelbar an den Abschnitt 12a bzw. den Abschnitt 12 auf der Symmetrieachse a an. Die Positionierhilfe 14 stellt damit sicher, dass der Kompressionsring nicht in einer unerwünschten bzw. unbrauchbaren Position im Brühkopf montiert wird.

Da es sich bei dem vorhergehenden, detailliert beschriebenen Kompressionsring um ein Ausführungsbeispiel handelt, kann er in üblicher Weise vom Fachmann in einem weiten Umfang modifiziert werden, ohne den Bereich der Erfindung zu verlassen. Insbesondere können auch die konkreten Ausgestaltungen der Abschnitte in anderer Länge oder mit anderen Querschnitten als in den hier beschriebenen erfolgen, also auch quadratische, rechteckige, trapezförmige oder zusammengesetzte Querschnitte. Ebenso kann die Anzahl der unterschiedlichen Durchmesser i.Ü. gleicher Querschnitte in einer anderen Art gewählt werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 10, 10a: Abschnitt mit geringerem Durchmesser
- 12, 12a: Abschnitt mit größerem Durchmesser
- 14: Positionierhilfe
- 16: Übergangsabschnitt
- a: Symmetrieachse
- d: geringerer Durchmesser
- k, l, m, n: Bogenlänge
- D: größerer Durchmesser
- E: Durchmesser im Übergangsabschnitt
- M: geometrischer Mittelpunkt des Kompressionsrings

## Patentansprüche

1. Kompressionsring aus einem elastischen Material mit einem Schnurquerschnitt und mit einer definierten Steifigkeit zur Abdichtung des Brühkopfs einer Heißgetränkepadmaschine, **dadurch gekennzeichnet, dass** der Schnurquerschnitt variiert.

2. Kompressionsring nach Anspruch 1, **gekennzeichnet durch** einen kreisförmigen Schnurquerschnitt mit einem variierenden Schnurdurchmesser (D; d).

3. Kompressionsring nach Anspruch 1 oder 2, **gekennzeichnet durch** mindestens zwei Abschnitte (10; 12) mit innerhalb des Abschnitts (10; 12) konstantem und gegenüber einem anderen Abschnitt (12; 10) unterschiedlichem Schnurdurchmesser (D; d).

4. Kompressionsring nach einem der obigen Ansprüche, **gekennzeichnet durch** eine gleiche Anzahl der Abschnitten (10; 12) mit jeweils unterschiedlichen Schnurdurchmessern (D; d).

5. Kompressionsring nach einem der obigen Ansprüche, **gekennzeichnet durch** sechs Abschnitte (10) mit einem ersten Schnurdurchmesser (d) und sechs Abschnitte (12) mit einem zweiten Schnurdurchmesser (D).

6. Kompressionsring nach einem der obigen Ansprüche, **gekennzeichnet durch** eine unterschiedliche Länge (k; n) der Abschnitte (10; 12).

7. Kompressionsring nach einem der obigen Ansprüche, **gekennzeichnet durch** eine unterschiedliche Länge (k; l) von Abschnitten (10; 12) mit gleichem Schnurdurchmesser (d; D).

8. Kompressionsring nach einem der obigen Ansprüche, **gekennzeichnet durch** mindestens einen weiteren Schnurdurchmesser (E), der betragsmäßig zwischen demjenigen (d) eines ersten Abschnitts (10) und demjenigen (D) eines zweiten Abschnitts (12) liegt und am Übergang zwischen dem ersten (10) und dem zweiten Abschnitt (12) angeordnet ist.

9. Kompressionsring nach einem der obigen Ansprüche, **gekennzeichnet durch** Positionierhilfe (14).

10. Heißgetränkepadmaschine mit einem Kompressionsring nach einem der obigen Ansprüche zur Abdichtung einer Brühkammer.
